# FASCICULE DE BREVET EUROPEEN

(11) **EP 2 127 475 B1**
(45) Date de publication et mention de la délivrance du brevet: **29.06.2016**
(21) Numéro de dépôt: 08762118.1
(22) Date de dépôt: 19.02.2008
(51) Int. Cl.: H05B 3/84

(54) **VITRE TRANSPARENTE AVEC UN REVÊTEMENT CHAUFFANT**
TRANSPARENTES GLAS MIT ERWÄRMUNGSBESCHICHTUNG
TRANSPARENT GLASS WITH HEATING COATING

(30) Priorité: 23.02.2007 DE 102007008833
(43) Date de publication de la demande: 02.12.2009
(73) Titulaire: Saint-Gobain Glass France, 92400 Courbevoie (FR)
(72) Inventeur: BLANCHARD DR, Ariane, 52064 Aachen (DE); SCHALL, Günther, 52372 Kreuzau (DE); MAURER DR, Marc, 60350 Saint Jean aux Bois (FR)
(74) Mandataire: Lucas, Francois
(86) Numéro de dépôt international: PCT/FR2008/050270
(87) Numéro de publication internationale: WO 2008/104728

(56) Documents cités:
- EP-A- 0 524 537
- EP-A- 0 849 977
- EP-A1- 0 625 422
- EP-A2- 0 788 295
- WO-A-2006/040498
- WO-A-2007/083160
- GB-A- 2 091 528
- GB-A- 2 381 179
- US-A- 5 877 473

## Description

L'invention concerne une vitre transparente avec un revêtement chauffant électriquement, présentant les caractéristiques du préambule de la revendication 1.

Il existe sur le marché, particulièrement pour les pare-brise de véhicules, une forte demande de modèles chauffants, dans lesquels le chauffage en lui-même doit être aussi peu que possible perceptible ou gênant visuellement. On demande dès lors de plus en plus un revêtement transparent chauffant pour les vitres.

Un problème général des revêtements chauffants à faible absorption de la lumière est leur résistance de surface encore relativement élevée qui, en tout cas pour de grandes dimensions de la vitre à chauffer ou pour de longs trajets du courant, nécessitent une tension de service élevée, qui est dans tous les cas supérieure aux tensions de bord usuelles dans les véhicules. Si l'on voulait abaisser la résistance de surface, il en résulterait avec les systèmes stratifiés actuellement connus une diminution de la transmission de la lumière visible, parce que les couches conductrices devraient être plus épaisses.

Pour ces raisons techniques, on monte encore actuellement de préférence des vitres chauffées par des fils, qui peuvent être sans problèmes alimentées avec la tension de bord usuelle. Ces vitres composites avec des champs chauffants incorporés en fils très fins ne sont cependant pas acceptées par tous les clients.

Il est également connu (WO 2006/024809 A1) de munir de telles vitres chauffées par des fils d'un revêtement transparent thermo-isolant, sous forme composite.

Un autre problème des revêtements chauffants est lié au fait qu'ils ne peuvent parfois pas être appliqués de manière homogène sur toute la surface de la vitre transparente, mais que l'on doit prévoir une ou plusieurs interruptions, dites "fenêtres de communication", qui dégradent le flux du courant de chauffage et conduisent éventuellement à la formation de "hot spots" (surchauffes locales) sur leurs bords. De telles fenêtres de communication servent à rendre le revêtement, qui par nature réfléchit le rayonnement à ondes courtes ou infrarouge, localement plus perméable à certains flux ou signaux d'informations.

Pour introduire et évacuer le courant de chauffage dans de tels revêtements, il est prévu au moins une paire d'électrodes (en forme de bandes) ou de conducteurs collecteurs (aussi "bus bars"), qui doivent introduire les courants de façon aussi uniforme que possible dans la surface de la couche et les répartir sur un front large. Dans les vitres de véhicules, qui sont nettement plus larges que hautes, les conducteurs collecteurs sont la plupart du temps situés le long des bords longs de la vitre (les bords supérieurs et inférieurs en position de montage), de telle manière que le courant de chauffage puisse circuler sur le trajet plus court sur la hauteur de la vitre. De même, les fenêtres de communication précitées sont la plupart du temps situées sur le bord supérieur de la vitre et s'y étendent sur une largeur de plusieurs centimètres.

Le document WO 00/72 635 A1 décrit un substrat transparent muni d'un revêtement réfléchissant les IR et d'une fenêtre de communication produite en enlevant ou en omettant le revêtement de la surface.

On connaît en outre par le document DE 36 44 297 A1 une pluralité d'exemples permettant de diviser des revêtements chauffants d'un pare-brise de véhicule. Des divisions peuvent ainsi être réalisées par des zones de la surface démunies de couches et/ou par des incisions pratiquées mécaniquement ou avec un rayonnement laser. Elles servent pour régler et dévier de façon ciblée un flux de courant à l'intérieur de la surface revêtue et doivent garantir une densité de courant aussi uniforme que possible dans les surfaces concernées.

Par le document WO 2004/032 569 A2, on connaît une autre configuration d'une vitre transparente avec un revêtement chauffant, qui cherche également à obtenir une homogénéisation de la puissance de chauffage dans la surface par des lignes de séparation pratiquées dans le revêtement.

Le document DE 29 36 398 A1 porte sur des mesures visant à empêcher, dans une vitre transparente avec un revêtement chauffant, des pointes de courant à la transition entre les conducteurs collecteurs et le revêtement. D'une manière générale, on cherche à réduire la différence de résistance brusque entre le revêtement et les conducteurs collecteurs en utilisant des matériaux ou des formes à plus haute résistance électrique pour ces derniers, ou encore avec des résistances intermédiaires. Pour le revêtement, on y indique des résistances de surface entre 1 et 10 ohms par carré. Dans une des nombreuses variantes de solution décrites ici, le côté de chaque conducteur collecteur orienté vers le conducteur collecteur opposé est réalisé sous forme ondulée. La formation de pointes orientées vers le revêtement chauffant doit en l'occurrence être évitée. Cette approche cherche à allonger sensiblement la ligne de transition entre le conducteur collecteur et le revêtement et ainsi à diminuer la densité de courant dans cette transition. Toutes ces mesures paraissent cependant peu aptes à alimenter la couche chauffante avec une tension relativement basse.

Il est également connu (DE 10 2004 050 158 B3), dans une vitre de fenêtre applicable à chauffage électrique, de raccourcir le trajet du courant à travers le revêtement, en prolongeant pratiquement les conducteurs collecteurs dans la zone de la surface couverte par la couche au moyen d'éléments conducteurs à faible résistance ohmique sous la forme de voies conductrices ou de fils conducteurs s'étendant depuis les conducteurs collecteurs jusque dans le champ chauffant. Avec cette solution, la puissance de chauffage peut cependant être trop faible dans la zone de la couche directement adjacente aux conducteurs collecteurs.

Les conducteurs collecteurs, déjà mentionnés à plusieurs reprises, peuvent être produits aussi bien par impression (sérigraphique) avant ou après le dépôt du revêtement sur la vitre, que par brasage de minces bandes de métal, de préférence de cuivre (étamé). Il existe également des combinaisons de conducteurs collecteurs imprimés et en bandes métalliques (voir par exemple DE 198 29 151 C1). Les conducteurs collecteurs sont certes la plupart du temps en forme de bandes étroites, ils sont cependant opaques. Pour des raisons optiques, ils sont dès lors chaque fois disposés à proximité du bord extérieur des vitres transparentes concernées. La plupart du temps, ils peuvent être masqués par des revêtements de bord opaques (généralement réalisés aussi par sérigraphie). De même, les fenêtres de communication mentionnées peuvent être masquées par ces revêtements de bord, dans la mesure où ces derniers sont suffisamment transparents pour le rayonnement à transmettre.

Dans les pare-brise de véhicule courants, ces revêtements opaques sont réalisés en forme de cadres, dont une autre fonction consiste à protéger l'assemblage collé entre la vitre et la carrosserie contre le rayonnement UV. Ces cadres entourent le champ de vision des vitres. Dans les pare-brise, on distingue en outre encore un champ de vision A au milieu de la surface de vision, dans lequel il ne peut y avoir aucun obstacle à la vision (par exemple couleurs, fils, ou autres dommages), et le champ de vision B plus proche du bord.

Il est enfin connu de chauffer séparément les vitres de véhicules essuyées par des essuie-glaces dans la zone d'arrêt ou de rangement des essuie-glaces. Le document EP 849 977 B1 décrit un chauffage avec une boucle de fil ne couvrant que cette zone de rangement. Le document US 5 434 384 et le document DE 101 60 806 A1 divulguent au contraire des vitres chauffantes avec des couches chauffantes, dans lesquelles un champ chauffant particulier pour la zone d'arrêt des essuie-glaces est séparé de la couche chauffante et est pourvu de ses propres conducteurs collecteurs.

Il est également connu (DE 10 2004 054 161 A1) de prévoir, dans une zone limitée de la surface d'une vitre de véhicule prévue pour le passage d'un rayonnement infrarouge de transmission d'informations, des éléments chauffants séparés, qui doivent empêcher une dégradation de la transmission infrarouge dans cette zone par la condensation, la neige et/ou le givre.

Il est également connu par le document EP 0 524 537 un pare-brise dont une feuille de verre est munie d'un revêtement électroconducteur sur la majeure partie de sa surface, le revêtement ayant une première partie dans le champ de vision et une seconde partie dans une partie de stockage des essuis-glace au repos, la seconde partie pouvant être chauffée indépendamment de la première partie.

Le but de l'invention est de procurer une autre vitre transparente avec un revêtement chauffant, qui peut fonctionner avec des tensions de service relativement basses et qui produit néanmoins une répartition homogène de la chaleur ainsi qu'un chauffage fiable d'une zone partielle de la surface de la vitre, par exemple d'une zone de rangement d'essuie-glaces, ou d'une autre zone partielle (par exemple des fenêtres de capteurs ou analogues). Pour des raisons visuelles, ces zones se trouveront de préférence au bord de la vitre respective.

Ce but est atteint selon l'invention par les caractéristiques de la revendication 1. Les caractéristiques des revendications secondaires présentent des formes de réalisation avantageuses de cette invention.

Le fait de prévoir un chauffage au moyen d'un élément chauffant séparé avec des résistances de chauffage formées par des fils et/ou des voies conductrices imprimées dans une zone de bord séparée ou définie, en particulier dans la zone d'une position de repos d'essuie-glaces, au lieu d'un chauffage au moyen du revêtement, permet d'atteindre plusieurs avantages, ou d'éviter certains inconvénients qui affectaient les vitres antérieures.

En particulier, lorsque la zone de chauffage de la couche est rétrécie par ladite zone de bord, le trajet du courant à travers le revêtement à haute résistance électrique devient a priori plus court, de sorte que l'on peut opérer ici avec une tension d'alimentation relativement basse. Au besoin, on peut aussi, selon une forme de réalisation avantageuse, réduire de façon connue en soi la distance entre les conducteurs collecteurs à l'aide d'éléments conducteurs supplémentaires à faible résistance électrique.

Avec l'élément chauffant séparé pour la zone de bord, qui est situé sur la même face que le revêtement, on assure en outre que cette zone de bord peut être chauffée séparément ou indépendamment et ainsi très rapidement et très efficacement, et que l'on ne doit y envisager aucun affaiblissement de la puissance de chauffage, lorsque l'on prévoit les éléments conducteurs supplémentaires précités sur les conducteurs collecteurs destinés au revêtement chauffant.

Certes, cette configuration est utilisée de manière absolument préférée pour des pare-brise, dans lesquels il importe que la vision soit bonne dans le champ de vision central pour une conduite sûre, cependant des vitres chauffantes selon l'invention peuvent aussi être montées en d'autres endroits (par exemple lunette arrière, vitres latérales) dans des véhicules ainsi que dans d'autres machines et appareils mobiles de même que dans des bâtiments.

Lorsqu'elle est appliquée dans des véhicules, la forme de réalisation selon l'invention permet en particulier l'alimentation directe du chauffage de pare-brise avec la tension de bord usuelle de 12 à 14 V en tension continue, ce qui correspond naturellement très bien à un revêtement avec une résistance électrique aussi faible que possible. La longueur d'éléments conducteurs supplémentaires éventuels est dimensionnée en fonction de la résistance de surface effective du revêtement respectif; plus le revêtement lui-même est bon conducteur, plus des éléments conducteurs peuvent être courts.

De même, cette configuration permet de conserver le revêtement sur toute la surface de la vitre transparente - à l'exception d'éventuelles fenêtres de communication à prévoir - de sorte qu'aucune mesure de masquage ou d'enlèvement de couche n'est nécessaire. De cette manière, les propriétés positives du revêtement, à savoir en particulier la réflexion infrarouge (isolation thermique) et la coloration homogène sur toute la surface, sont préservées.

Les éléments conducteurs supplémentaires aussi minces que possible ne gênent la vue à travers la vitre que de manière pratiquement imperceptible.

Pour séparer la zone chauffée par le revêtement chauffant de la zone chauffée par l'élément chauffant, soit on sépare électriquement le revêtement entre les deux zones de chauffe, par exemple par une ligne de découpe du revêtement, soit le revêtement au niveau de l'élément chauffant est passivé. Dans une autre variante, la zone de la surface chauffée par l'élément chauffant ne présente pas du tout de revêtement.

Etant donné que la vitre transparente est, dans pratiquement tous les cas, une vitre composite, dans laquelle le revêtement lui-même est disposé sur une face située à l'intérieur du composite, les éléments conducteurs pourraient aussi, au lieu d'être imprimés, être réalisés par de fins fils, qui sont fixés de manière connue en soi sur un film adhésif du composite et ensuite appliqués avec le film sur le revêtement, ce qui les met en contact électrique avec le revêtement. Ce contact est stable à long terme après le collage final de la vitre composite.

Lorsqu'ils sont réalisés sous la forme de structures par sérigraphie, les éléments conducteurs sont appliqués sur un substrat (vitre de verre ou de plastique ou aussi film de plastique) de préférence avant le dépôt du revêtement. Ceci peut être réalisé en une seule opération avec la pose des conducteurs collecteurs ou des barres omnibus proprement dit(e)s.

Il est en outre possible d'enjamber avec ces éléments conducteurs, avec une faible résistance électrique, une fenêtre de communication pratiquée dans le revêtement sensiblement sur le bord de la vitre, sans devoir craindre la formation de points chauds. Les courants présents dans les zones problématiques connues sur les bords latéraux de ces fenêtres de communication sont très fortement réduits par les éléments conducteurs.

D'autres détails et avantages de l'objet de l'invention apparaîtront par les dessins de deux exemples de réalisation d'un pare-brise de véhicule et par leur description détaillée qui suit.

Dans ces dessins, qui sont des représentations simplifiées sans échelle particulière,
- La Fig. 1: représente une forme de réalisation d'une vitre transparente avec un revêtement chauffant électriquement dans le champ de vision et un élément chauffant supplémentaire dans une zone de bord; et
- La Fig. 2: illustre une deuxième forme de réalisation avec une variante de l'élément chauffant séparé.

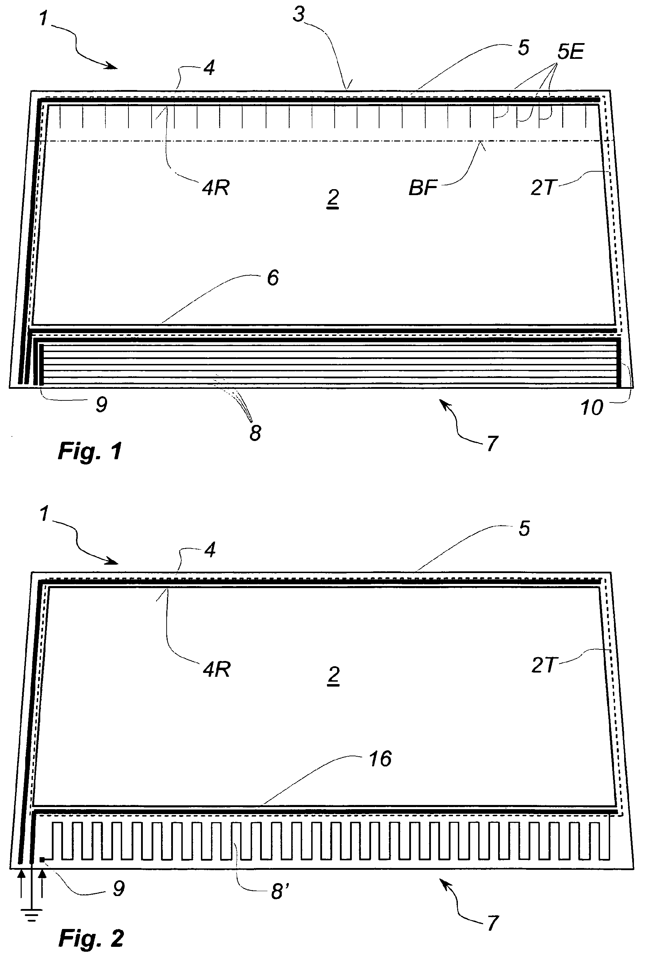

Selon la Figure 1, un revêtement électriquement conducteur et entièrement transparent 2 est incorporé de façon connue en soi dans une vitre composite chauffante 1 de forme essentiellement trapézoïdale.

Une ligne en traits interrompus, désignée par 2T, indique que le bord extérieur de la surface revêtue en continu est légèrement en retrait vers l'intérieur, sur tous les côtés, par rapport au bord extérieur 3 de la vitre composite 1 ou qu'une bande de bord est séparée du revêtement total. On obtient ainsi d'une part une isolation électrique vers l'extérieur, et d'autre part une protection du revêtement contre des attaques de corrosion provenant du bord extérieur. Le retrait du bord extérieur 2T peut être produit en enlevant le revêtement le long du bord de la vitre, en masquant le substrat lors du dépôt du revêtement ou aussi en traçant une ligne de séparation périphérique qui traverse le revêtement le long du bord extérieur de la vitre, ce qui peut suffire pour l'isolation et la protection contre la corrosion.

Le revêtement lui-même se compose de préférence et de façon connue en soi d'un système de couches pouvant supporter une haute charge thermique avec au moins une, et de préférence plusieurs couches partielles métalliques (de préférence en argent), qui supporte sans dommage, c'est-à-dire sans dégradation de ses propriétés optiques, thermoréfléchissantes et électriques, les températures de plus de 650°C nécessaires pour la courbure des vitres de verre. Outre des couches métalliques, le système de couches comprend encore d'autres couches partielles comme des couches antireflet et éventuellement des couches d'arrêt. Un système de couches utilisable pour l'objectif visé ici est divulgué par exemple dans le document EP 1 412 300 A1.

En relation avec la présente invention, on peut cependant utiliser également d'autres systèmes de couches électriquement conducteurs avec une moindre capacité thermique, et notamment aussi des systèmes de couches qui ne sont pas déposés directement sur une vitre rigide de verre ou de plastique, mais sur un film de plastique (de préférence un film de PET). Tous ces systèmes de couches sont déposés de préférence par pulvérisation (pulvérisation cathodique au magnétron).

La résistance de surface des systèmes de couches courants du type mentionné plus haut est comprise entre 1 et 5 Ω/□. Les pare-brise de véhicule pourvus de tels systèmes de couches doivent, en vertu des normes européennes, atteindre au total une transmission de lumière d'au moins 75 %. Cela signifie que le système de couches seul doit fournir une transmission optique encore plus élevée. Malheureusement, la demande d'une plus grande transparence optique est incompatible avec le souhait d'atteindre une résistance de surface aussi basse que possible pour le revêtement. Plus les couches partielles conductrices sont épaisses, mieux elles conduisent le courant mais aussi plus leur transparence baisse.

La composition et la fabrication du revêtement 2 ont cependant ici une importance secondaire, de sorte que l'on ne s'y attardera pas davantage.

Sur le bord de la vitre composite 1, on a déposé une couche de couleur opaque 4 en forme de cadre, dont le bord intérieur 4R circonscrit le champ de vision de la vitre transparente 1, ou en d'autres termes forme le bord extérieur de celui-ci. Elle peut aussi se trouver dans un autre plan (situé à l'intérieur ou à l'extérieur de la vitre composite) de la vitre composite que le revêtement 2. Elle sert de couche de protection contre le rayonnement UV pour un cordon de colle, avec lequel la vitre terminée est collée dans une carrosserie de véhicule. Par ailleurs, elle fait office de masque optique pour les éléments de raccordement de fonctions électriques supplémentaires de la vitre 1. Elle n'a cependant aucune influence sur la conductibilité du revêtement 2.

On voit ainsi, le long du bord supérieur de la vitre composite 1 dans la zone de la surface recouverte par la couche de couleur 4, un premier conducteur collecteur 5, et le long du bord inférieur un deuxième conducteur collecteur 6. Les deux conducteurs collecteurs 5 et 6 sont électriquement raccordés au revêtement 2, de façon connue en soi.

De nombreux pare-brise de véhicule sont munis d'une bande colorée, mais néanmoins transparente ("bande de filtre") le long de leur bord supérieur, qui réduit notamment l'éblouissement par les rayons du soleil. La vitre décrite ici peut aussi comporter une telle bande de filtre; sa ligne de délimitation inférieure est indiquée en option ici par une ligne en traits interrompus BF. En dessous de cette limitation, le champ de vision de la vitre est clair, au-dessus il est translucide et teinté et/ou coloré plus ou moins fortement.

Il convient de signaler ici que dans des vitres (pare-brise) réelles, le rapport hauteur-largeur peut être pratiquement carré, ce qui signifie que le trajet du courant dans le revêtement peut être très long, lorsque les conducteurs collecteurs sont disposés sur les bords supérieur et inférieur.

La vitre composite 1 se compose en général de deux vitres rigides en verre et/ou en plastique et d'une couche adhésive qui les assemble en surface (par exemple un film adhésif thermoplastique en polyvinyl butyral "PVB", en éthylène-acétate de vinyle "EVA" ou aussi en polyuréthane "PU"). Le revêtement 2 et les conducteurs collecteurs 5 et 6 sont appliqués sur une des surfaces situées à l'intérieur du composite d'une des vitres rigides et éventuellement courbés à chaud en même temps que la vitre, avant que la couche adhésive soit jointe et collée avec les vitres rigides.

Les conducteurs collecteurs 5 et 6 peuvent se composer de bandes de film métallique minces et étroites (cuivre, aluminium), qui sont fixées sur la surface de la vitre et qui viennent en contact électrique avec le revêtement 2 au plus tard lors de l'assemblage des couches du composite. Le contact électrique peut cependant aussi être assuré par brasage ou impression des conducteurs collecteurs 5 et 6. Lors du traitement ultérieur en autoclave, on assure le contact entre les conducteurs collecteurs et le revêtement par l'action de la chaleur et de la pression.

Comme on l'a déjà indiqué, les conducteurs collecteurs 5 et 6 peuvent, en variante ou en complément, être réalisés par impression d'une pâte conductrice, qui est cuite lors du bombage des vitres. Ceci est également nettement moins coûteux que la pose de segments de bande métallique. Pourtant, les conducteurs collecteurs imprimés présentent dans tous les cas, lors de la fabrication industrielle en continu, une résistance électrique plus élevée que les bandes de film métallique. Un choix de conducteurs collecteurs formés par des films métalliques ou par sérigraphie n'est dès lors possible qu'en fonction du type de vitre individuel et éventuellement de la résistance totale du système de chauffage.

Par comparaison avec le revêtement 2, les conducteurs collecteurs 5 et 6 présentent cependant toujours des résistances électriques négligeables et ne s'échauffent pratiquement pas lorsque le chauffage fonctionne.

On peut prévoir de façon connue en soi dans la vitre composite 1 deux (ou plus de deux) champs chauffants pouvant être alimentés séparément en électricité (avec une séparation verticale par exemple au milieu de la vitre), qui doivent naturellement aussi être raccordés par des raccords extérieurs séparés à la source de tension respective. Dans ce cas, un peut utiliser un conducteur de masse commun pour les deux champs chauffants de sorte que seul le conducteur collecteur 5 ou le conducteur collecteur 6 doive être divisé en deux segments, tandis que l'autre est continu. Dans la première variante, il faut quatre raccords extérieurs, et dans la deuxième seulement trois.

Dans la forme de réalisation illustrée ici, avec un seul champ chauffant, le courant de chauffage circule sur un front large entre les conducteurs collecteurs 5 et 6 en direction de la plus courte extension (donc verticale) de la vitre 1. Le conducteur collecteur supérieur 5 est conduit de haut en bas vers le bord inférieur de la vitre, à l'extérieur de la surface électriquement active du revêtement 2 (donc entre le bord extérieur de la vitre et la ligne de séparation 2T, en recouvrement avec la couche colorée opaque 4), de telle manière qu'il puisse y être mis en contact électriquement vers l'extérieur en un point avec le conducteur collecteur 6. On peut naturellement aussi réaliser une telle jonction locale des raccords en tout autre point de la périphérie de la vitre, ou éventuellement aussi s'en passer, de sorte qu'il en résulte des raccords extérieurs plus écartés l'un de l'autre.

Dans la région du bord inférieur de la vitre, le cadre coloré opaque est nettement plus large que le long des autres bords de la vitre. De même, la ligne de séparation 2T est davantage en retrait vers le milieu de la vitre dans cette zone de bord. De cette manière, on procure dans cette zone de bord inférieure une surface partielle libre de revêtement chauffant ou en tout cas non chauffée. Cette surface partielle peut certes être couverte par le revêtement, si celui-ci est appliqué sur toute la surface avant le découpage des contours de vitres. On n'envisage cependant pas de chauffer cette surface partielle avec le revêtement. On peut dès lors également prévoir de ne pas du tout revêtir cette surface partielle, par un masquage, lorsque l'on ne dépose le revêtement que sur les vitres déjà découpées, ou d'enlever de nouveau le revêtement déposé sur cette surface partielle.

Il convient de souligner que cette surface partielle, sur laquelle des essuie-glaces sont appliqués lorsque la vitre est montée dans un véhicule, sera relativement étroite par rapport à la surface totale de la vitre. Dans le cas d'une fenêtre de vision de capteur, la surface partielle ne sera pas non plus aussi large que celle représentée ici. On voit ici un élément chauffant supplémentaire 7 d'un type en principe conventionnel, à savoir un faisceau de fils ou de voies conductrices parallèles 8 en une matière de faible résistance électrique par rapport au revêtement, qui s'étendent parallèlement au bord inférieur de la vitre et qui peuvent être raccordés à une tension électrique à l'aide de deux conducteurs collecteurs 9 et 10. Alors que le conducteur collecteur 9 peut être assez court sur l'extrémité gauche de l'élément chauffant 7, parce qu'il se trouve de toute façon dans la région du contact extérieur des conducteurs collecteurs 5 et 6, le conducteur collecteur droit 10 est coudé au-dessus de l'élément chauffant 7 et est prolongé jusqu'à l'extrémité gauche de l'élément chauffant 7, afin que lui aussi puisse être raccordé vers l'extérieur dans la région de contact. Ceci présente l'avantage qu'un seul élément de raccordement extérieur doit sortir hors de la vitre terminée.

L'élément chauffant 7 peut, de façon connue en soi, être préfabriqué sous forme d'élément séparé sur un film et être incorporé en bloc dans la vitre composite. On peut également le placer - de façon également connue en soi - sur un film adhésif, qui est prévu pour l'assemblage par collage de surface des vitres rigides du composite. Enfin, on peut également le fabriquer par impression sur une surface des vitres rigides - notamment de préférence sur la surface qui est également pourvue du revêtement 2.

L'élément chauffant 7 peut fonctionner indépendamment du chauffage de surface par le revêtement 2, mais aussi bien entendu en même temps que celui-ci si le véhicule possède des ressources électriques suffisantes (puissance du générateur). De cette manière, ces deux dispositifs de chauffage peuvent aussi avoir une protection électrique indépendante l'un de l'autre.

On peut par exemple activer automatiquement l'élément chauffant 7, dès que l'on constate un risque de gel des essuie-glaces. Un tel fonctionnement automatique en fonction de la température extérieure et du degré d'humidité de l'air peut par exemple être utilisé judicieusement lorsque - ce qui n'est pas rare en pratique - un véhicule est arrêté avec les essuie-glaces encore enclenchés et que, au démarrage suivant, les essuie-glaces éventuellement gelés veulent démarrer mais sont bloqués. Avec un dégivrage automatique, qui inclut la position actuelle de l'interrupteur des essuie-glaces, on pourrait éviter au moins de graves dommages au système d'entraînement des essuie-glaces.

On ne s'attardera pas en détail ici sur les raccords extérieurs mentionnés, parce que ceux-ci ont été décrits à de multiples reprises dans l'état de la technique. De préférence, on utilise des éléments de câbles plats (film isolant avec plusieurs voies conductrices parallèles, du type décrit par exemple dans le document DE 195 36 131 C1), qui peuvent être utilisés sans problèmes dans une vitre composite et sortir hors de celle-ci.

De façon connue en soi, comme cela est indiqué ici sur le conducteur collecteur supérieur 5, on peut étendre un faisceau d'éléments conducteurs 5E dans le champ de vision de la vitre composite 1 à partir de la zone de bord recouverte par la couche colorée 3 jusque dans le champ de vision du côté du bord de la vitre. Ces éléments conducteurs 5E sont électriquement raccordés au conducteur collecteur 5 et au revêtement 2, et de leur côté avec une faible résistance électrique par comparaison avec ce dernier. Ils sont d'une part cachés à la vue par la couche colorée, un autre masquage peut éventuellement, comme on l'a déjà indiqué, être formé par une bande de couleur teintée (bande de filtre) non représentée ici.

De tels éléments conducteurs (non représentés ici) peuvent également, si nécessaire, s'étendre dans le champ de vision de la vitre composite 1 à partir du conducteur collecteur inférieur 6.

Alors que, dans des vitres conventionnelles avec un chauffage par couche de ce type, le courant de chauffage ne doit circuler que dans le revêtement sur toute la distance entre les conducteurs collecteurs, cette distance peut être réduite à des valeurs de 50 à 80 % avec les éléments conducteurs selon la présente invention, une partie du courant franchissant la distance restante dans les éléments conducteurs.

Comme auparavant, on conserve alors un flux de courant réduit sur toute la surface du revêtement, parce que les conducteurs collecteurs ne sont pas séparés du revêtement dans les segments entre les éléments conducteurs.

Pour l'objectif de l'invention déjà discuté plus haut, ces éléments conducteurs supplémentaires 5E doivent aussi présenter un contact électrique intime avec le revêtement 2, en plus de leur bonne conductibilité. On peut certes en principe imaginer de les réaliser sous la forme de segments de fil. De préférence, ils sont cependant imprimés, avant le dépôt du revêtement, sur la surface de la vitre qui doit ultérieurement porter le revêtement.

Il est également possible de les imprimer en même temps que les conducteurs collecteurs sur le revêtement terminé, sans courir ainsi le risque d'endommager le revêtement - qui doit aussi être très résistant mécaniquement dans ses compositions récentes. Ceci présente l'avantage que l'on peut déposer le revêtement sur toute la surface de bandes de verre, découper les contours des vitres, ensuite imprimer et enfin les envoyer à un traitement thermique tel que le bombage et/ou la précontrainte.

Au point de vue fonctionnel, le courant de chauffage circule dans le revêtement 2 dans la même direction que dans les éléments conducteurs 5E, donc perpendiculairement à l'extension longitudinale principale des conducteurs collecteurs.

De préférence, les éléments conducteurs ainsi que les conducteurs collecteurs sont imprimés à partir d'une pâte de sérigraphie contenant au moins 80 %, et de préférence plus de 85 % d'argent.

Si l'on utilise des conducteurs collecteurs 5 et 6 imprimés, alors des éléments conducteurs 5E éventuellement prévus peuvent être produits en une opération et avec la même pâte d'impression. Ensuite, aucune opération séparée n'est plus nécessaire pour la mise en contact électrique des éléments conducteurs et des conducteurs collecteurs.

Si l'élément chauffant 7 doit aussi être formé par impression, il est recommandé de le réaliser en une seule opération de sérigraphie en même temps que les conducteurs collecteurs 5 et 6 et éventuellement que les éléments conducteurs optionnels. On peut cependant aussi imaginer d'imprimer l'élément chauffant 7 sur un film de transfert séparé, qui est ensuite inséré dans le composite, les conducteurs de chauffage étant posés sur la surface de la vitre qui porte aussi le revêtement 2.

Les longueurs, les dispositions et les distances mutuelles des éléments conducteurs 5E, leur nombre ainsi que les dimensions des conducteurs collecteurs ne peuvent être représentés ici que de manière schématique. On peut cependant voir les dimensions relatives. Alors que les conducteurs collecteurs proprement dits 5 et 6 sont réalisés avec une largeur de quelques millimètres sous la forme de bande usuelle, les éléments conducteurs 5E sont aussi étroits et aussi peu visibles que possible, mais nettement plus longs que la largeur des conducteurs collecteurs.

La configuration individuelle dans une vitre composite concrète peut certes être prédéterminée dans de larges limites par des simulations, elle dépend cependant fortement de la grandeur ou des dimensions de la vitre concrète, du type des conducteurs collecteurs et des propriétés électriques du revêtement réel. Pour des détails plus précis et en particulier pour des représentations en coupe de ces vitres, on se reportera au document DE 10 2004 050 158 B3 déjà mentionné dans l'introduction, dont la divulgation est incorporée ici.

Pour des pare-brise de véhicules, il faut notamment veiller à ce que les éléments conducteurs ne s'étendent en aucun cas dans le champ de vision A normalisé de la vitre, dans lequel la vision ne peut être gênée par aucun obstacle clairement visible, en raison des prescriptions d'autorisation. Dans le champ de vision B entourant ce champ de vision A, il peut au contraire y avoir de petits obstacles à la vision.

La Figure 2 montre une variante de la vitre 1, dans laquelle l'élément chauffant 7 est imprimé sous la forme d'une voie conductrice sinueuse individuelle 8', d'une manière également connue en soi. Ce méandre recouvre toute la zone, dans laquelle des essuie-glaces s'appliquent dans leur position de repos. En même temps, un conducteur collecteur 16 (comme unité fonctionnelle composée du conducteur collecteur 6 et du conducteur collecteur 10 de la Figure 1) sert aussi de conducteur de masse commun pour le revêtement 2 et pour l'élément chauffant 7. Il est à cet effet désigné par un symbole de masse à son extrémité côté raccord. Les raccords d'alimentation du revêtement 2 et de l'élément chauffant 7 sont au contraire désignés par des flèches dirigées vers l'extérieur (qui représentent la direction du courant). Cette disposition présente, par rapport à la Figure 1, l'avantage que seules trois voies conductrices ou brins de câble sont nécessaires comme raccords extérieurs. Des séparations électriques éventuellement nécessaires du revêtement et du champ chauffant sont possibles sans problème à l'extérieur de la vitre 1, éventuellement aussi à l'intérieur du composite (résistances à couche mince, diodes, etc.).

Dans ce mode de réalisation selon la Figure 2, il est recommandé d'enlever le revêtement 2 dans la zone de bord (inférieure) de la vitre 1 ou même de ne pas en déposer du tout. Etant donné qu'une séparation électrique entre la voie conductrice 8' et le revêtement peut difficilement être représentée, le but du méandre (à savoir élargir virtuellement la voie conductrice 8') pourrait être contrecarré par un court-circuit partiel par le revêtement 2.

Dans la forme de réalisation selon la Figure 1, avec un faisceau de conducteurs parallèles, le revêtement 2 peut au contraire rester continu, parce qu'il ne faut envisager ici aucun effet de court-circuit.

Selon encore une autre variante de l'élément chauffant 7, qui n'est pas représentée ici, on pourrait aussi le représenter sous la forme d'une boucle conductrice fermée sans distinction entre des voies conductrices et des conducteurs collecteurs ou par une pluralité de boucles conductrices imbriquées les unes dans les autres avec des points initiaux et finaux communs.

Le choix final parmi ces solutions possibles dépend de la puissance électrique à produire, de la tension d'entrée à appliquer et surtout des dimensions de l'élément chauffant 7.

Finalement, il faut souligner que l'on peut aussi modifier la position de montage de l'élément chauffant 7 du côté du bord. Alors que notamment dans la plupart des véhicules, les essuie-glaces sont arrêtés le long du bord inférieur de la vitre en position de montage, il existe aussi des véhicules où la position de repos des essuie-glaces est verticale, donc parallèle au ou aux bords verticaux de la vitre montée. Bien entendu, des éléments chauffants du type décrit ici peuvent aussi être prévus avec de telles vitres; on prévoira alors éventuellement deux éléments chauffants latéraux, lorsqu'il faut chauffer deux essuie-glaces. Bien entendu, ceci s'applique également aux lunettes arrière de véhicules, qui sont équipées d'essuie-glaces.

## Revendications

1. Vitre transparente (1) avec un revêtement chauffant électriquement (2), qui s'étend sur une partie importante de la surface de la vitre, en particulier sur son champ de vision (4R), et qui est relié électriquement à au moins deux conducteurs collecteurs à faible résistance électrique (5, 6), de telle manière qu'après l'application d'une tension d'alimentation électrique aux conducteurs collecteurs, un courant électrique circule dans un champ chauffant formé par le revêtement, **caractérisée en ce qu'**il est prévu un élément chauffant (7) avec des fils et/ou des voies conductrices imprimées à faible résistance électrique par rapport au revêtement (2) dans une zone de la surface non chauffée par le revêtement (2) et sur la même face que le revêtement (2), le revêtement (2) et l'élément chauffant (7) étant alimentés électriquement indépendamment l'un de l'autre, et les fils et/ou les voies conductrices imprimées s'étendant parallèlement au bord inférieur de la vitre et étant raccordés à une tension électrique à l'aide de deux conducteurs collecteurs (9, 10).

2. Vitre selon la revendication 1, **caractérisée en ce que** la zone de la surface non chauffée par le revêtement (2) se trouve au bord de la vitre transparente (1).

3. Vitre selon la revendication 1 ou 2, **caractérisée en ce qu'**elle est une vitre composite composée d'au moins deux vitres rigides et d'une couche adhésive assemblant celles-ci l'une à l'autre par collage de surface, et **en ce que** le revêtement (2) et l'élément chauffant (7) se trouvent sur une face, située à l'intérieur du composite, d'une des vitres rigides.

4. Vitre selon la revendication 1, 2 ou 3, **caractérisée en ce que** le revêtement (2) présente une résistance de surface comprise entre 1 et 5 ohms/□ et contient une ou plusieurs couches partielles électriquement conductrices.

5. Vitre selon l'une quelconque des revendications précédentes, **caractérisée en ce que** le revêtement (2) dans la zone de la surface chauffée par l'élément chauffant (7) est séparé électriquement du champ chauffant chauffé par le revêtement (2) ou passivé, ou en ce que cette zone de la surface chauffée par l'élément chauffant (7) ne présente pas de revêtement.

6. Vitre selon l'une quelconque des revendications précédentes, **caractérisée en ce que** l'élément chauffant (7) comprend au moins un conducteur unique (8'), ou une pluralité de conducteurs (8) raccordés électriquement en parallèle.

7. Vitre selon l'une quelconque des revendications précédentes, **caractérisée en ce que** le revêtement (2) et l'élément chauffant (7) ont des raccords extérieurs séparés l'un de l'autre.

8. Vitre selon l'une quelconque des revendications précédentes, **caractérisée en ce que** le revêtement (2) et l'élément chauffant (7) ont un conducteur de masse commun (16).

9. Vitre selon l'une quelconque des revendications précédentes, **caractérisée en ce que** d'autres éléments conducteurs (5E), notamment des lignes imprimées et/ou des fils, à faible résistance électrique, s'étendent dans le champ chauffant en contact avec le revêtement (2) à partir d'au moins un des conducteurs collecteurs (5, 6).

10. Vitre selon l'une quelconque des revendications précédentes, **caractérisée en ce que** son bord est couvert par une couche de couleur opaque (4) au moins sur une partie de sa périphérie, en particulier dans la région des conducteurs collecteurs (5, 6) et de la zone partielle chauffée avec l'élément chauffant (7).

11. Vitre selon l'une quelconque des revendications précédentes, **caractérisée en ce que** les autres éléments conducteurs (5E) sont disposés avec des distances uniformes ou non uniformes les uns par rapport aux autres, ont tous la même longueur ou ont tous des longueurs différentes, et sont réalisés sous forme de lignes, de boucles ouvertes ou fermées, de droites, d'arcs et/ou de méandres.

12. Vitre selon l'une quelconque des revendications précédentes, **caractérisée en ce que** les autres éléments conducteurs (5E) ne sont disposés que sur une partie de l'extension longitudinale d'un ou des deux conducteurs collecteurs (5, 6).

13. Vitre selon l'une quelconque des revendications précédentes dans une forme de réalisation comme pare-brise de véhicule, **caractérisée en ce que** les autres éléments conducteurs (5E) s'étendent au maximum jusqu'à la limite du champ de vision A normalisé de ce pare-brise.

14. Vitre selon l'une quelconque des revendications précédentes, **caractérisée en ce que** l'élément chauffant (7) se trouve dans la zone de la position de repos ou de rangement d'essuie-glaces prévus pour l'essuyage de la vitre, notamment s'étend le long d'un ou de plusieurs côtés latéraux de la vitre (1).

15. Vitre selon l'une quelconque des revendications précédentes, **caractérisée en ce qu'**une bande de couleur teintée (BF) s'étend au moins le long de son bord supérieur en position de montage et y masque au moins en partie des éléments conducteurs (5E) disposés à cet endroit.

## Patentansprüche

1. Transparente Scheibe (1) mit einer elektrisch beheizbaren Beschichtung (2), die sich über einen wesentlichen Teil der Fläche der Scheibe, insbesondere über deren Sichtfeld (4R) erstreckt und die mit mindestens zwei niederohmigen Sammelleitern (5, 6) elektrisch so verbunden ist, dass nach Anlegen einer elektrischen Speisespannung an die Sammelleiter ein Strom in einem von der Beschichtung gebildeten Heizfeldzirkuliert, **dadurch gekennzeichnet, dass** in einem von der Beschichtung (2) nicht beheizten Flächenbereich und auf der gleichen Fläche wie die Beschichtung (2) ein Heizelement (7) mit gegenüber der Beschichtung (2) niederohmigen Drähten und/oder gedruckten Leiterbahnen vorgesehen ist, wobei die Beschichtung (2) und das Heizelement (7) unabhängig voneinander elektrisch gespeist werden und sich die Drähte und/oder die gedruckten Leiterbahnen parallel zu dem unteren Rand der Scheibe erstrecken und mit Hilfe von zwei Sammelleitern (9, 10) an eine elektrische Spannung angeschlossen sind.

2. Scheibe nach Anspruch 1, **dadurch gekennzeichnet, dass** der von der Beschichtung (2) nicht beheizte Flächenbereich sich am Rand der transparenten Scheibe (1) befindet.

3. Scheibe nach Anspruch 1 oder 2, **dadurch gekennzeichnet, dass** sie eine Verbundscheibe aus mindestens zwei starren Scheiben und einer diese flächigadhäsiv miteinander verbindenden Klebeschicht ist und dass die Beschichtung (2) und das Heizelement (7) sich auf einer im Verbund innen liegenden Fläche einer der starren Scheiben befinden.

4. Scheibe nach Anspruch 1 oder 2 oder 3, **dadurch gekennzeichnet, dass** die Beschichtung (2) einen Flächenwiderstand zwischen 1 und 5 Ohm pro Flächeneinheit hat und eine oder mehrere elektrisch leitfähige Teilschichten enthält.

5. Scheibe nach einem der vorstehenden Ansprüche, **dadurch gekennzeichnet, dass** die Beschichtung (2) in dem vom Heizelement (7) beheizten Flächenbereich von dem von der Beschichtung (2) beheiztn Heizfeld elektrisch abgetrennt oder passiviert ist, oder dass dieser vom Heizelement (7) beheizte Flächenbereich keine Beschichtung aufweist.

6. Scheibe nach einem der vorstehenden Ansprüche, **dadurch gekennzeichnet, dass** das Heizelement (7) mindestens einen einzigen Leiter (8'), oder eine Mehrzahl von elektrisch parallel geschalteten Leitern (8) umfasst.

7. Scheibe nach einem der vorstehenden Ansprüche, **dadurch gekennzeichnet, dass** die Beschichtung (2) und das Heizelement (7) voneinander getrennte Außenanschlüsse haben.

8. Scheibe nach einem der vorstehenden Ansprüche, **dadurch gekennzeichnet, dass** die Beschichtung (2) und das Heizelement (7) einen gemeinsamen Masseleiter (16) haben.

9. Scheibe nach einem der vorstehenden Ansprüche, **dadurch gekennzeichnet, dass** ausgehend von mindestens einem der Sammelleiter (5, 6) weitere niederohmige Leiterelemente (5E), insbesondere gedruckte Linien und/oder Drähte, sich in Kontakt mit der Beschichtung (2) in das Heizfeld hinein erstrecken.

10. Scheibe nach einem der vorstehenden Ansprüche, **dadurch gekennzeichnet, dass** ihr Rand zumindest auf einem Teil ihres Umfangs, insbesondere im Bereich der Sammelleiter (5, 6) und des mit dem Heizelement (7) beheizten Teilbereichs, von einer opaken Farbschicht (4) bedeckt ist.

11. Scheibe nach einem der vorstehenden Ansprüche, **dadurch gekennzeichnet, dass** die weiteren Leiterelemente (5E) mit relativ zueinander gleichmäßigen oder nicht gleichmäßigen Abständen zueinander angeordnet sind, alle mit gleicher Länge oder alle mit unterschiedlichen Längen ausgeführt sind und als Linien, offene oder geschlossene Schleifen, Geraden, Bögen und/oder Mäander ausgeführt sind.

12. Scheibe nach einem der vorstehenden Ansprüche, **dadurch gekennzeichnet, dass** die weiteren Leiterelemente (5E) nur über einen Teil der Längserstreckung eines oder beider Sammelleiter (5, 6) angeordnet sind.

13. Scheibe nach einem der vorstehenden Ansprüche in einer Ausführungsform als Fahrzeug-Windschutzscheibe, **dadurch gekennzeichnet, dass** die weiteren Leiterelemente (5E) sich höchstens bis zur Grenze des genormten A-Sichtfeldes dieser Windschutzscheibe erstrecken.

14. Scheibe nach einem der vorstehenden Ansprüche, **dadurch gekennzeichnet, dass** sich das Heizelement (7) im Bereich der Ruhe- oder Parkstellung von zum Wischen der Scheibe vorgesehenen Scheibenwischern befindet, sich insbesondere entlang einer oder mehrerer Seitenkanten der Scheibe (1) erstreckt.

15. Scheibe nach einem der vorstehenden Ansprüche, **dadurch gekennzeichnet, dass** sich mindestens entlang ihrem in Einbaulage oberen Rand ein getönter Farbstreifen (BF) erstreckt und dort an dieser Stelle angeordnete Leiterelemente (5E) wenigstens teilweise überdeckt.

## Claims

1. A transparent window pane (1) with an electrically heating coating (2) that extends over a large part of the surface of the window pane, in particular over its field of vision (4R), and which is electrically connected to at least two busbars (5, 6) of low electrical resistance, in such a way that, after an electrical supply voltage has been applied to the busbars, an electrical current flows in a heating field formed by the coating, **characterized in that** a heating element (7) with printed conducting tracks and/or wires of low electrical resistance compared to the coating, such as, is provided in a zone of the surface that is not heated by the coating (2) and on the same face as the coating (2), the coating (2) and the heating element (7) being electrically supplied independently of each other, and the printed conducting tracks and/or wires extending parallel to the lower edge of the window pane and being connected to an electrical voltage by means of two busbars (9, 10).

2. The window pane as claimed in claim 1, **characterized in that** the zone of the surface not heated by the coating (2) lies on the edge of the transparent window pane (1).

3. The window pane as claimed in claim 1 or 2, **characterized in that** it is a composite window pane made up of at least two rigid panes and of an adhesive layer joining them together by surface bonding, and **in that** the coating (2) and the heating element (7) lie on one face, located on the inside of the composite, of one of the rigid panes.

4. The window pane as claimed in claim 1, 2 or 3, **characterized in that** the coating (2) has a surface resistance of between 1 and 5 ohms/□ and contains one or more electrically conducting partial layers.

5. The window pane as claimed in any one of the preceding claims, **characterized in that** the coating (2) in the zone of the surface heated by the heating element (7) is electrically separated from the heating field heated by the coating (2) or is passivated, or **in that** this zone of the surface heated by the heating element (7) does not have a coating.

6. The window pane as claimed in any one of the preceding claims, **characterized in that** the heating element (7) includes at least a single conductor (8') or a plurality of conductors (8) electrically connected in parallel.

7. The window pane as claimed in any one of the preceding claims, **characterized in that** the coating (2) and the heating element (7) have external connectors separated from each other.

8. The window pane as claimed in any one of the preceding claims, **characterized in that** the coating (2) and the heating element (7) have a common ground conductor (16).

9. The window pane as claimed in any one of the preceding claims, **characterized in that** other conducting elements (5E) of low electrical resistance extend into the heating field in contact with the coating (2) from at least one of the busbars (5, 6).

10. The window pane as claimed in any one of the preceding claims, **characterized in that** its edge is covered by an opaque colored layer (4) at least over part of its periphery, in particular in the region of the busbars (5, 6) and in the partial zone heated with the heating element (7).

11. The window pane as claimed in any one of the preceding claims, **characterized in that** the other conducting elements (5E) are placed at uniform or non-uniform distances apart, all have the same length or all have different lengths, and are produced in the form of lines, open or closed loops, straight segments, arcs and/or meanders.

12. The window pane as claimed in any one of the preceding claims, **characterized in that** the other conducting elements (5E) are placed only over part of the longitudinal extension of one or both busbars (5, 6).

13. The window pane as claimed in any one of the preceding claims in one embodiment as a vehicle windshield, **characterized in that** the other conducting elements (5E) extend at most as far as the boundary of the standardized field of vision A of this windshield.

14. The window pane as claimed in any one of the preceding claims, **characterized in that** the heating element (7) lies in the zone in which the wipers provided for wiping the window pane are in the parked or stowed position, especially extends along one or more lateral sides of the window pane (1).

15. The window pane as claimed in any one of the preceding claims, **characterized in that** a tinted color strip (BF) extends at least along its upper edge in the mounting position and at least partly masks there conducting elements (5E) placed in this region.
